# EUROPÄISCHE PATENTSCHRIFT

(11) **EP 2 736 810 B1**
(45) Veröffentlichungstag und Bekanntmachung des Hinweises auf die Patenterteilung: **10.06.2020**
(21) Anmeldenummer: 12733065.2
(22) Anmeldetag: 29.06.2012
(51) Int. Cl.: B65B 35/18, B65B 69/00, B65G 47/91

(54) **VORRICHTUNG UND VERFAHREN ZUM ENTPACKEN UND ZUFÜHREN VON FLACH GEFALTETEN UND AUFRECHT STEHENDEN PACKUNGSMÄNTELN**
DEVICE AND METHOD FOR UNPACKING AND SUPPLYING FLAT FOLDED AND UPRIGHT CARTON SLEEVES
DISPOSITIF ET PROCÉDÉ DE DÉBALLAGE ET D'AMENÉE D'EMBALLAGES DE CONDITIONNEMENT PLIÉS À PLAT ET DEBOUT

(30) Priorität: 29.07.2011 DE 102011108798
(43) Veröffentlichungstag der Anmeldung: 04.06.2014
(73) Patentinhaber: SIG Technology AG, 8212 Neuhausen am Rheinfall (CH)
(72) Erfinder: CRAMER, Thomas, 28857 Syke (DE)
(74) Vertreter: Cohausz & Florack
(86) Internationale Anmeldenummer: PCT/EP2012/062659
(87) Internationale Veröffentlichungsnummer: WO 2013/017348

(56) Entgegenhaltungen:
- EP-A1- 0 059 982
- EP-A1- 0 404 272
- EP-A1- 0 411 523
- DE-A1- 19 959 285
- DE-A1-102004 043 102
- DE-A1-102007 041 423
- GB-A- 1 017 535
- US-A- 4 696 615
- US-A- 5 970 834
- US-A- 5 984 623
- US-A1- 2011 100 175

## Beschreibung

Die Erfindung betrifft eine Vorrichtung und ein Verfahren zur Übergabe von flach gefalteten und aufrecht stehenden Packungsmänteln an eine Weiterverarbeitungseinheit, insbesondere Füllmaschine für flüssige oder pastöse Lebensmittel, wobei jeweils eine bestimmte Anzahl Packungsmäntel in einer Umverpackung zur Verfügung gestellt werden und wobei die Umverpackungen der Packungsmäntel geöffnet und entfernt werden.

Ein Verfahren und eine Vorrichtung für die Übergabe von Zuschnitten aus Umverpackungen an eine Weiterverarbeitungseinheit ist aus der auf die Anmelderin zurückgehende DE 103 55 544 A1 bekannt. Zur Vermeidung von Beschädigungen der in den Umverpackungen befindlichen Zuschnitte werden diese zusammengepresst, um einen notwendigen Hohlraum zum Durchführen des Schneidmessers zu schaffen. Hierfür ist es erforderlich, dass die Umverpackungen der Vorrichtung einzeln auf einer linearen Zuführeinrichtung zugeführt werden.

Aus der US 4 696 615 A1 ist eine Kopiermaschine bekannt, die nicht dazu geeignet ist flach gefaltete und aufrecht stehende Packungsmäntel an eine Weiterverarbeitungseinheit, insbesondere Füllmaschine, zu übergeben. Die Kopiermaschine weist eine automatische Zuführung von Papierbogenstapeln auf, die der Maschine magazinartig in Umverpackungen zugeführt und automatisch entpackt werden. Dabei sind die zur Weiterverarbeitung in die Kopiermaschine zuzuführenden Papierbögen in eine stabile waagerechte Lage zu verbringen, bevor ihre, die Bögen in geordneter Relativlage haltende, Umverpackung entfernt wird.

Eine Vorrichtung zum Zuführen von Materialbögen in eine Verpackungsmaschine ist aus der EP 0 411 523 A1 bekannt, wobei die Materialbögen horizontal gestapelt und mit einem Band umwickelt sind. Um die Materialbögen der Verpackungsmaschine zuführen zu können, wird das den Stapel umwickelnde Band aufgetrennt und entfernt.

Davon ausgehend liegt der Erfindung die Aufgabe zugrunde, das bislang personengestützte Beladen einer Füllmaschine mit Packungsmänteln weitgehend zu automatisieren. Dazu soll eine zuverlässig arbeitende Vorrichtung geschaffen werden, um sowohl das Zuführen der aufrecht stehenden Packungsmäntel als auch das Entfernen und Entsorgen der Umverpackungen maschinell betreiben zu können.

Gelöst wird diese Aufgabe bei einer Vorrichtung nach Anspruch 1.

Eine bevorzugte Ausgestaltung der Erfindung sieht vor, dass das Greifelement mehrere pneumatisch betriebene Vakuumsaugelemente aufweist. Bevorzugt sind hier drei in einer Ebene in einem Dreieck angeordnete Vakuumsaugelemente vorgesehen, wobei die Größe des Dreiecks so gewählt ist, dass alle drei Vakuumsaugelemente auf einer Seite der Umverpackung anliegen können.

In einer bevorzugten Ausgestaltung der Erfindung weist das Greifelement in eine weitere Ebene schwenkbare Arme mit Vakuumsaugelementen auf, um die Umverpackung weiter zu fixieren, so dass auch schnellere lineare und/oder rotatorische Bewegungen des Greifelements möglich sind.

Außerdem lässt sich so zuverlässig die Umverpackung von einer ersten in eine zweite Ebene drehen, wobei stets an der - jeweiligen - oberen Fläche Vakuumsaugelemente angreifen.

In weiterer Ausgestaltung der Erfindung weist der Roboterarm oder das Greifelement wenigstens einen optischen Sensor zum Erkennen der Lage und Ausrichtung der Umverpackungen auf. Bevorzugt umfasst dieser optische Sensor einen Laser, einen Detektor zum Erfassen des reflektierten Laserstrahls und wenigstens einen schwenkbaren Spiegel zur 3D-Objekt- und Lagebestimmung. Auf diese Weise ist es möglich, die Ausrichtung der verschachtelt auf Paletten angelieferten Umverpackungen eindeutig zu identifizieren. Zweckmäßigerweise sind die Umverpackungen mit entsprechenden Markierungen versehen, um die Lageerkennung zu erleichtern.

Eine weitere Lehre der Erfindung sieht vor, dass die Schneide- und Auspackstation eine Messereinheit zum Aufschneiden der Umverpackungen aufweist. Damit die Umverpackungen auch zuverlässig von den Packungsmänteln entfernt werden können, weist die Schneide- und Auspackstation darüber hinaus bevorzugt auch eine Öffnungs- und Wendeeinrichtung auf, um die Umverpackung mit der aufgeschnittenen und geöffneten Seite nach unten aufzustellen, so dass die Entnahme der Packungsmäntel vereinfacht wird.

Weiter bevorzugt verfügt die Schneide- und Auspackstation über eine Hebeplatte zum Absetzen der von der Umverpackung befreiten Packungsmäntel, wobei die Hebeplatte vertikal verfahrbar ist, um einerseits das Abziehen der Umverpackungen zu erleichtern und andererseits die Packungsmäntel auf die Ebene der Übergabeeinrichtung bringen zu können.

In weiterer Ausgestaltung der Erfindung verfügt die Vorrichtung über Mittel zum Flachfalten und Entsorgen der entfernten Umverpackungen. Eine solche Ausgestaltung ist für einen vollautomatisierten Betrieb zweckmäßig, um nicht nur die kontinuierliche Zufuhr der verpackten Packungsmäntel sondern auch die Entsorgung der nicht mehr benötigten leeren Umverpackungen zu gewährleisten.

Um die Greifeinrichtung zuverlässig mit dem Greifelement zu verbinden, erfolgt nicht nur eine Aufnahme über die Vakuumsaugelemente, sondern es findet auch eine Zwangskopplung beider Teile statt.

Damit die erfindungsgemäße Vorrichtung bei kontinuierlichem Betrieb der Füllmaschine auch dann zuverlässig arbeiten kann, wenn ein Palettenwechsel mit neuen Umverpackungen notwendig ist, verfügt sie nach einer weiteren erfindungsgemäßen Lehre über wenigstens ein Magazin zur Aufnahme einer Mehrzahl von ungeöffneten Umverpackungen, so dass während eines Palettenwechsels die benötigten Umverpackungen aus diesem Magazin entnommen werden können.

Bei einem entsprechenden Verfahren erfolgt die Lösung der Aufgabe durch die Schritte nach Anspruch 13.

Wie bereits bei der Beschreibung der Vorrichtung ausgeführt, werden die Umverpackungen bevorzugt auf einer Palette angeliefert. Damit die Paletten nicht jedes Mal exakt in eine bestimmte Position innerhalb der Vorrichtung gebracht werden müssen, erfolgt in weiterer Ausgestaltung der Erfindung vor Schritt a) eine Erkennung der Lage und Ausrichtung der ungeöffneten Umverpackungen, damit das Greifelement die Umverpackungen nacheinander einzeln von der Palette aufnehmen kann. Bevorzugt erfolgt zwischen den Schritten a) und b) auch eine Zwischenspeicherung ungeöffneter Umverpackungen in ein Magazin, um einen kontinuierlichen Betrieb zu gewährleisten.

Eine weitere Lehre der Erfindung sieht vor, dass die Umverpackungen von einem Greifelement zunächst an ihrer freien Längsseite und zusätzlich auf ihrer Oberseite von Vakuumsaugelementen gegriffen werden, um einen sicheren Halt zuverlässig zu gewährleisten. Während der Übergabe an die Schneide- und Auspackstation werden die Umverpackungen vom Greifelement derart gedreht, dass die Oberseite der Packungsmäntel zur Messereinheit weist.

Es versteht sich, dass das Aufschneiden auf verschiedene Weise erfolgen kann, und zwar durch die Bewegung des Schneidmessers, der Umverpackung oder gar eine überlagerte Bewegung von beiden. Wichtig ist eine Relativbewegung von Schneidmesser und Umverpackung. Bevorzugt führt das Greifelement die Umverpackung am feststehenden Messer entlang.

In weiterer Ausgestaltung der Erfindung ist vorgesehen, dass das Aufschneiden der Packung und das Absaugen des dabei entstehenden Schneidstaubes auch gleichzeitig erfolgen kann. Es ist klar, dass ein unmittelbar nach dem Schneidvorgang stattfindendes Absaugen das Risiko einer Kontamination deutlich verringert.

Nach einer weiteren erfindungsgemäßen Lehre wird vor Schritt i) auch die Oberseite der auf der Hebeplatte kopfüber stehenden Packungsmäntel abgesaugt. Auf diese Weise ist gewährleistet, dass sämtliche Öffnungsbereiche der noch flach gefalteten Packungsmäntel staubfrei sind.

Eine weitere erfindungsgemäße Ausgestaltung sieht vor, dass die entfernten und einseitig offenen Umverpackungen vom Greifelement einer Kartonagenpresse zugeführt werden, in der die noch geschlossene Unterseiten so eingeschnitten und gefaltet werden, dass eine nachfolgende Presseinrichtung die Kartons definiert zusammenpressen kann. Dazu stanzen in der Presseinrichtung angeordnete Schneidmesser dreieckige Klinken in die zusammengepressten Seitenwände, die dann so vercrimpt werden, dass sich der zusammengedrückte Karton nach dem sich anschließenden Abwurf in einen Abfallwagen nicht mehr öffnen kann.

Die Erfindung wird nachfolgend anhand eines bevorzugten Ausführungsbeispiels näher erläutert. In der Zeichnung zeigen
- Fig. 1A bis 1C: eine erfindungsgemäße Vorrichtung in einer Dreiseitenansicht,
- Fig. 2A bis 2C: das den Kern der erfindungsgemäßen Vorrichtung bildende Greifelement in Dreiseitenansicht,
- Fig. 3: das Greifelement aus Fig. 2 mit daran befestigter Greifeinrichtung in Seitenansicht,
- Fig. 4: die Schneide- und Auspackstation in schematischer Draufsicht und
- Fig. 5A bis 5F: die Abfolge beim Öffnen einer Umverpackung in Seitenansicht.

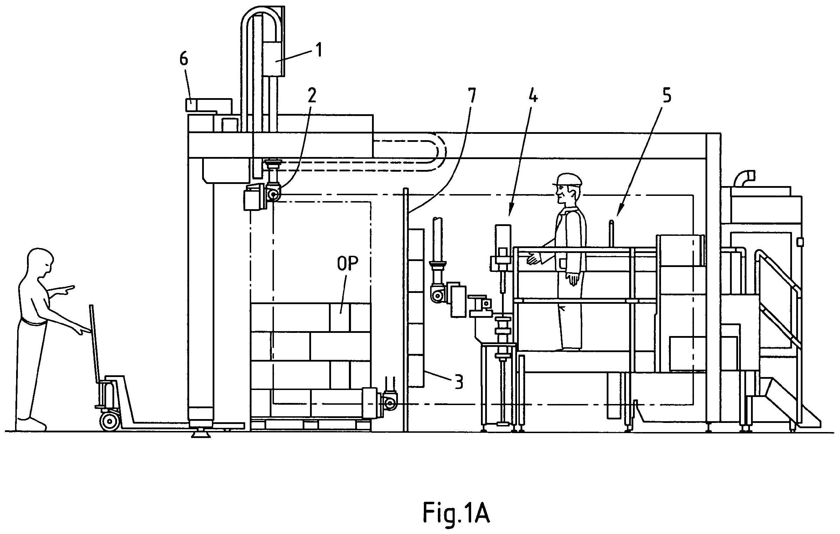

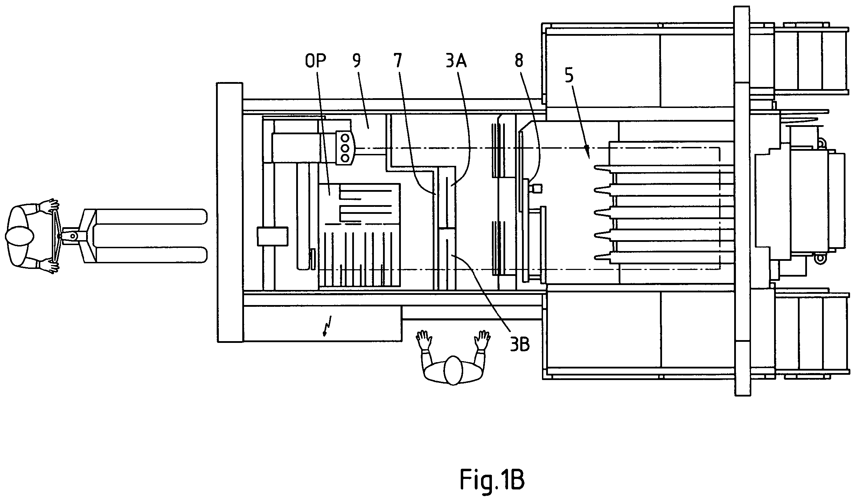

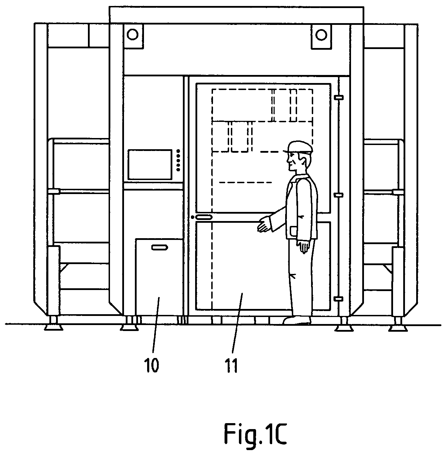

Die in einer Dreiseitenansicht in Fig. 1 dargestellte Vorrichtung weist im wesentlichen die folgenden Elemente auf: Einen Roboterarm 1 mit überwiegend numerisch gesteuerten Bewegungsachsen, ein Greifelement 2 mit überwiegend pneumatisch angetriebenen Bewegungsachsen, im dargestellten und insofern bevorzugten Ausführungsbeispiel ein Magazin 3 zur Zwischenspeicherung von Umverpackungen OP, die im dargestellten Ausführungsbeispiel auf einer Palette P als Transportgebinde gestapelt sind, eine Schneide- und Auspackstation 4 sowie eine Übergabeebene 5 an eine (nicht dargestellte) sich an die Vorrichtung anschließende Füllmaschine. Ein Laserscanner 6 erkennt Lage und Ausrichtung der Umverpackungen OP sowie deren Abstand zum Greifelement 1. Eine Schleusenwand 7 trennt die Vorrichtung in eine Zufuhrseite (links) und eine Arbeitsseite (rechts).

In der Draufsicht nach Fig. 1B ist erkennbar, dass das Magazin 3 zwei nebeneinander angeordnete Aufnahmeschächte 3A und 3B aufweist. Rechts daneben ist eine Messereinheit 8 zum Aufschneiden der Umverpackungen OP erkennbar. Als Umverpackung wird ein Karton bezeichnet in dem die Rohlinge (Packungsmäntel) der zu befüllenden Verpackungen bereitgestellt werden. Auf der Übergabeebene 5 sind vier parallele nicht näher bezeichnete Aufnahmeschienen für die sich anschließenden Linien der Füllmaschine erkennbar, in die die entpackten Packungsmäntel in Richtung der Füllmaschine aufrecht stehend hineingeführt werden müssen. Ferner verfügt die Vorrichtung über eine Kartonagenpresse 9 und einen Abfallwagen 10 für die entfernten und flachgelegten Umverpackungen OP.

Aufgrund der Gefährdung bei laufendem Betrieb verfügt die Vorrichtung über eine Gefahrenbereichsabgrenzung, d.h. die gesamte Vorrichtung ist außen herum gekapselt. Eine Zugangstür 11 erlaubt das Bereitstellen der Paletten P. Die Bereitstellung der Paletten P kann sowohl durch ein (nicht dargestelltes) personengeführtes Flurförderfahrzeug als auch durch ein automatisiertes Speicher- und Zuführsystem erfolgen.

Es versteht sich von selbst, dass der Roboterarm 1 bei geöffneter Zugangstür 11 nicht im Bereich der Zufuhrseite (links der Schleusenwand 7) arbeiten darf. Dennoch kann der laufende Betrieb fortgesetzt werden, da das Greifelement 2 auf der Arbeitsseite der Vorrichtung (rechts der Schleusenwand 7) Umverpackungen OP aus dem Magazin 3 entnehmen und der Schneide- und Auspackstation 4 zuführen kann.

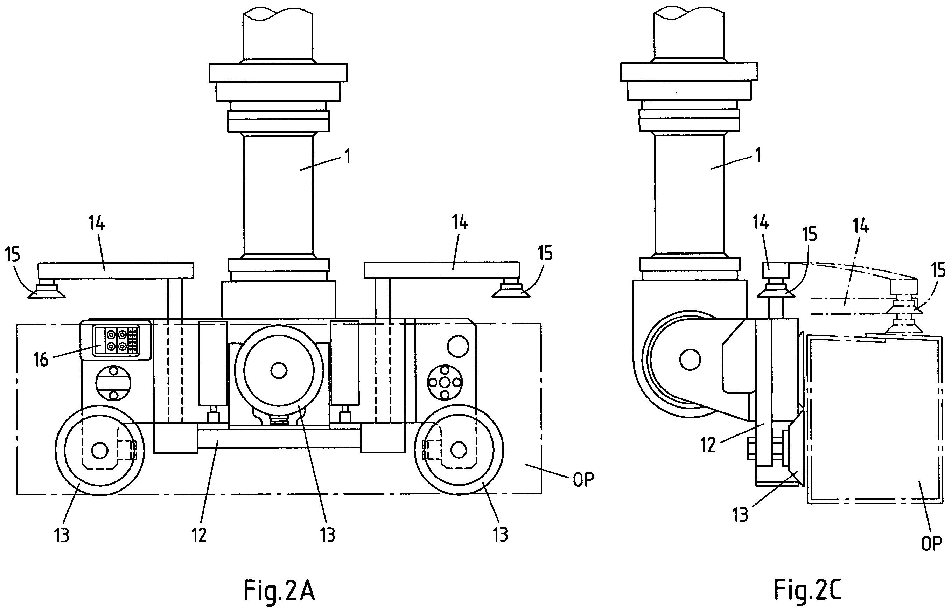

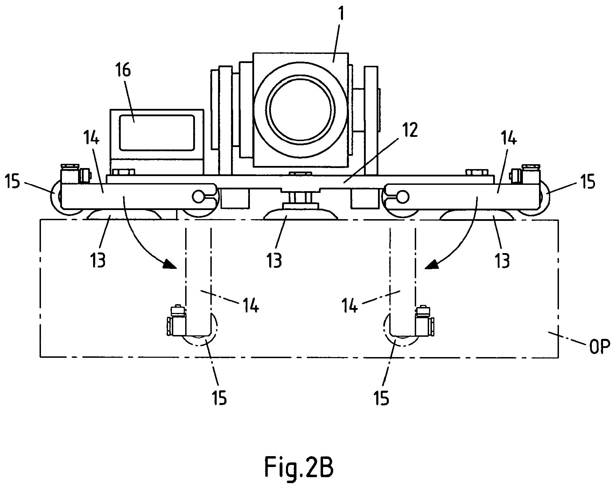

Fig. 2 zeigt ein Greifelement 2 in gegenüber Fig. 1 stark vergrößerter Darstellung. Es besteht zunächst und im wesentlichen aus einem schwenkbar am Ende des Roboterarms 1 angeordneten Joch 12, an dem drei Vakuumsaugelemente 13 in einem Dreieck angeordnet sind, wie aus der Seitenansicht von Fig. 2A hervorgeht. Man erkennt ferner zwei Schwenkarme 14, an deren Enden jeweils ein weiteres Vakuumsaugelement 15 angeordnet ist. Die Schwenkarme können entlang der Pfeile um 90° verschwenkt werden, so dass eine (strichpunktiert angedeutete) Umverpackung OP nach dem Aufnehmen mittels der Vakuumsaugelemente 13 von der Seite auch von oben mittels der Schwenkarme 14 und den Vakuumsaugelemente 15 gegriffen werden kann, wie insbesondere aus der Draufsicht in Fig. 2B sowie der Stirnansicht in Fig. 2C gut zu erkennen ist. Die pneumatischen Anschlüsse der Vakuumsaugelementen 13 und 15 sind der besseren Übersicht halber nicht im Einzelnen gezeigt, eine zur Versorgung notwendige elektropneumatische Kupplung 16 ist jedoch dargestellt.

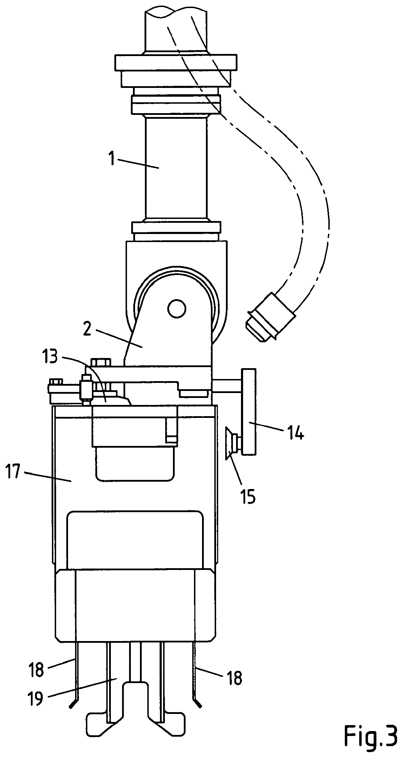

In Fig. 3 ist eine Greifeinrichtung 17 dargestellt, welche - genau wie eine Umverpackung OP - von einem am Ende eines Roboterarms 1 befindlichen Greifelement 2 mittels der Saugelemente 13 gegriffen werden kann. Auch hier können die zusätzlichen an den verschwenkbaren Armen 14 befindlichen Saugelemente 15 für eine weitere Fixierung sorgen, auch wenn dies in Fig. 3 nicht dargestellt ist. Wie bereits erwähnt findet bevorzugt zusätzlich eine mechanische Zwangskopplung statt.

Die Greifeinrichtung 17 ist notwendig, um nach der Entfernung der Umverpackung OP die aufrecht stehenden Packungsmäntel seitlich zu führen, damit diese anschließend gleichfalls mittels der Greifeinrichtung 17 der Zuführlinie einer Füllmaschine zugeführt werden können. Man erkennt in Fig. 3 Längsseitenführungen 18, deren Abmessungen im Wesentlichen denen einer Umverpackung OP entsprechen. Wichtig ist auch die Abstützung an den Stirnseiten. Hier werden eine Stirnseite der Greifeinrichtung 17 mit einer festen Stütze vorgesehen und eine weitere variable Stütze 19 auf der gegenüberliegenden Seite angeordnet, um die (nicht dargestellten) Packungsmäntel zusammen zu drücken.

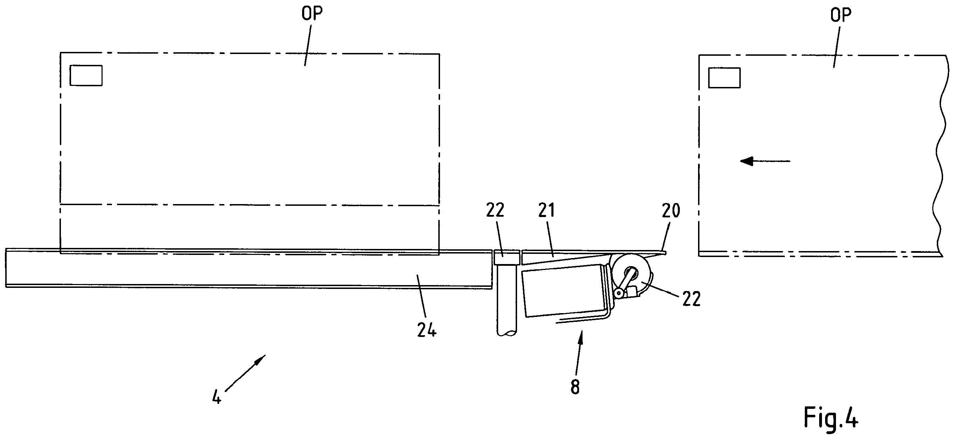

Fig. 4 zeigt die Schneide- und Auspackstation 4 mit einer feststehenden Messereinheit 8, an der die Umverpackungen OP von rechts nach links in Richtung des Pfeiles entlang bewegt werden.

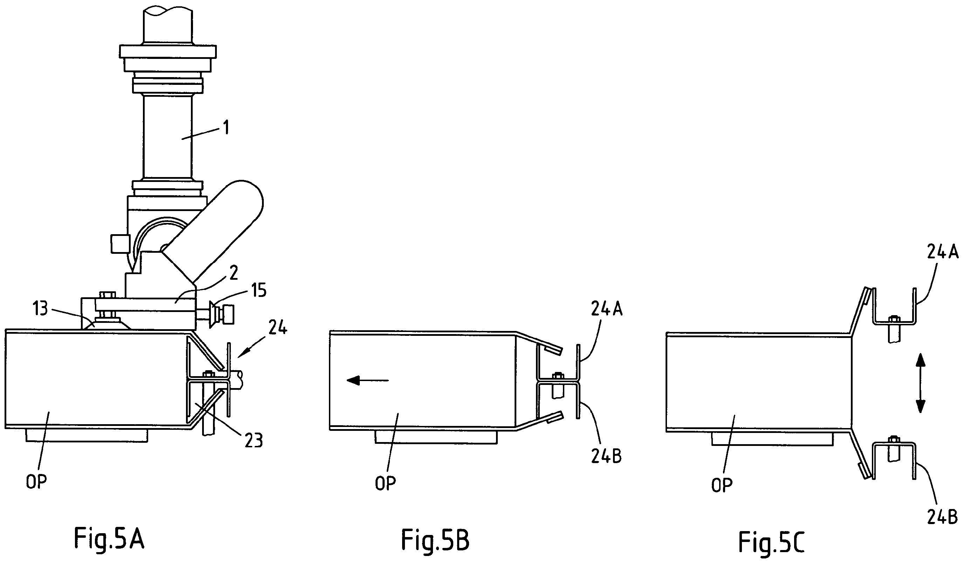

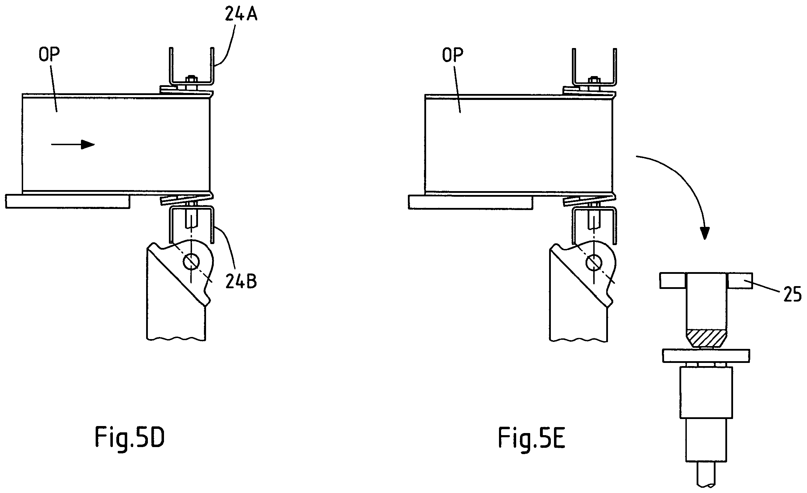

Zum besseren Verständnis ist der Öffnungsvorgang mit seinen einzelnen Schrittfolgen in den Fig. 5A bis 5F näher erläutert. Die Situation der Umverpackung OP in Fig. 5A entspricht im Wesentlichen der zuvor in Fig. 4 in Draufsicht dargestellt, nun jedoch in einer Seitenansicht, um den Öffnungsvorgang besser beschreiben zu können. Mittels dem Roboterarm 1 wird das Greifelement 2 mit der darin befindlichen Umverpackung OP mittels der in Fig. 4 dargestellten Messereinheit 8 längs aufgeschnitten und die beiden offenen Laschen werden einer Öffnungs- und Wendeeinrichtung 24 zugeführt, welche im Wesentlichen aus zwei spiegelsymmetrisch übereinander angeordneten U-Profilen besteht. Die nicht näher bezeichneten Laschen der Umverpackung OP tragen dabei ca. 45° aufgestellt in die U-Profile 24A und 24B hinein. Aus Fig. 4 wird deutlich, dass die Länge der Öffnungs- und Wendeeinrichtung 24 länger ist als die der Umverpackung OP selbst. Nachdem sich die Umverpackung OP nun vollständig in der Öffnungs- und Wendeeinrichtung 24 befindet, wird die Umverpackung OP mittels Greifelement 2 leicht nach links verschoben, so dass sich die offenen Laschen bedingt durch die U-Profile 24A und 24B weiter öffnen (Fig. 5B). Anschließend werden, wie in Fig. 5C dargestellt, die beiden U-Profile 24A und 24B auseinander geschoben, wobei gleichzeitig die Laschen der Umverpackung OP aufgebogen werden. Im nachfolgenden Schritt (Fig. 5D) wird die Umverpackung OP zwischen die beiden U-Profile 24A und 24B (in Fig. 5D nach rechts) verschoben, bis beide Laschen nahezu um 180° umgeschwenkt sind. In dieser Stellung verschwenkt nun das Greifelement die Umverpackung OP um 90°, wobei die beiden U-Profile 24A und 24B die Packungsmäntel innerhalb der nun offenen Umverpackung OP verspannen, auf eine Hebeplatte 25, wie in Fig. 5E dargestellt ist.

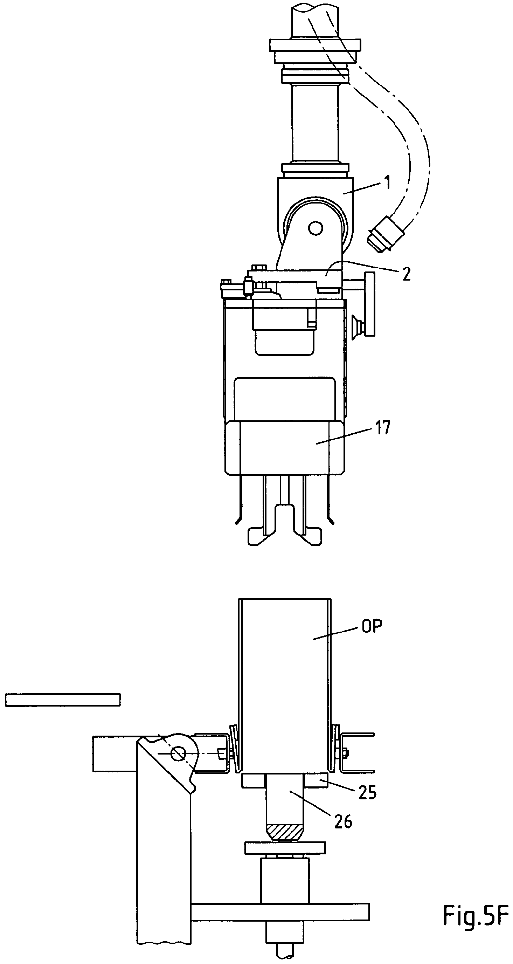

Fig. 5F zeigt schließlich, dass die Umverpackung OP nach dem Umschwenken auf die Hebeplatte 25 nach oben entfernt wird, wobei die dabei frei werdenden Packungsmäntel seitlich durch Federstützen 25 eingespannt werden. Nach der Entfernung der Umverpackung OP senkt sich der Roboterarm 1 mit der am Greifelement 2 verrasteten Greifeinrichtung 17 auf die freigelegten Packungsmäntel ab oder - alternativ - werden die Packungsmäntel bis in die Greifeinrichtung 17 angehoben. Nicht dargestellt ist, dass dabei die Hebeplatte in die Ebene der Übergabeeinrichtung 5 zur sich anschließenden Füllmaschine angehoben wird, um eine Übergabe in dieser Übergabeebene zu erreichen.

Nachfolgend wird der Funktionsablauf detailliert beschrieben:
In einem ersten Schritt werden Packmuster und Position der Umverpackungen OP auf der bereitgestellten Palette P bestimmt. Hierzu verfährt der Greifarm mit dem Laserscanner 6 über die oberste Lage der bereitgestellten Palette P. Eine Laserdiode der Scaneinrichtung sendet einen sehr kurzen, fokussierten Laserimpuls in Richtung des Scanobjektes, also der Palette P aus. Der Laserstrahl wird diffus von der Oberfläche reflektiert. Ein Detektor nimmt einen reflektierten Teil des Laserstrahls auf, die Laufzeit des Laserstrahles wird bestimmt und daraus der Abstand zum Objekt berechnet. Über die Stärke des reflektierten Laserlichtes werden Oberflächen und/oder Graustufen der Objektfarbe erfasst. Der Laserstrahl wird durch einen schwenkbaren Spiegel abgelenkt, so dass mit der Bestimmung des Schwenkwinkels eine Reihe von Messpunkten in Polarkoordinaten auf dem Objekt entstehen. Die Messdaten bestehen aus n Wertepaaren (Abstand, Winkel, Reflektionsstärke) so dass ein Abbild des Objektes in 2D entsteht. Zur 3D-Objektbestimmung verfährt der Roboterarm 1 mit dem Laserscanner 6 über das Objekt und addiert zu den 2D-Wertepaaren die jeweiligen Positionen der Verfahrachse. Durch dieses Verfahren kann die Position der Umverpackungen OP in der obersten Lage und durch ihre farbliche Kennzeichnung auf den Umverpackungen auch die Ausrichtung der Packungsmäntel innerhalb der Umverpackung OP bestimmt werden.

In einem zweiten Schritt wird die Umverpackung OP mittels Greifelement 2 aufgenommen. Hierzu fährt das Greifelement 2 mit horizontal angeordneten Vakuumsaugelemeten 13 an die aufzunehmende Umverpackung OP heran. Zusammen mit der seitlichen Aufnahme fahren Vakuumsaugelemente 15 von oben auf die Umverpackung OP und ermöglichen einen sicheren Umgriff derselben im Greifelement 2.

In einem dritten Schritt werden die Umverpackungen OP in den Arbeitsbereich der Vorrichtung verbracht und geöffnet. Durch das Überfahren der Schleusenwand 7, die im Falle der Palettenbereitstellung manuellen und automatisierten Arbeitsraum der Vorrichtung trennt, wird die Umverpackung OP auf der Schneide- und Auspackstation 4 im Arbeitsbereich der Vorrichtung abgelegt.

Hier schwenken die oberen Schwenkarme 14 des Greifelements 2 in die Ausgangsstellung zurück und geben den Zugang zum Kartonagenboden für die Messereinheit 8 frei. Der Roboterarm 1 führt nun die Umverpackung OP an die Vorlegezunge 20 der Schneideinrichtung heran und drückt mit der Vorlegezunge die Stirnseite der Umverpackung OP leicht ein, so dass diese durch das Zurückziehen der Umverpackung OP leicht unter den Kartonagenboden gleiten kann. In dem der Roboterarm 1 nun die Umverpackung OP in Richtung des Schneidmessers 22 verfährt gleitet die Vorlegezunge 20 zwischen Kartonagenboden und Packungsmäntel und vermeidet so deren Beschädigung beim Aufschneiden des Kartonagenbodens.

Durch das Zerschneiden des Kartonagenbodens und die keilförmige Ausbildung 21 der Vorlegezunge 20 wird der Boden so aufgerichtet, dass eine Absaugeinrichtung 23 zwischen Kartonagenboden und Packungsmäntel eindringen und die Packungsmäntel auf deren Unterseite absaugen kann. Dies gewährleistet die hygienische Bereitstellung der Packungsmäntel ohne evtl. anhaftenden Papierstaub aus der Vorfertigung. Im weiteren Verlauf der Verschiebung durch den Roboterarm 1 fahren die Laschen der aufgeschnittenen Umverpackung OP in die Öffnungs- und Wendeeinrichtung 24, in dem diese zwangsläufig geöffnet und so an die Kartonagenwand (5g) gelegt werden, dass bei einem Verschwenken der Umverpackung die Packungsmäntel auf die Hebeplatte 25 abgesetzt werden können, wie dies in den Fig. 5A bis 5F gezeigt ist. Kopfseitig fahren Dorne auf der Hebeplatte 25 durch die von den Vakuumsaugern 13, 15 gehaltene Umverpackung OP und trennen die Packungsmäntel von der Umverpackungsseitenwand, so dass die Greifeinrichtung 17 die Packungsmäntel zwischen zwei Klammern einspannen kann. Im Anschluss, ohne Gefahr an der Seitenwand anhaftende Packungsmäntel mitzuziehen, hebt der Roboterarm 1 die Umverpackung von den eingespannten Packungsmänteln ab. Anschließend verbringt das Greifelement 2 die Umverpackung zu einer Kartonagenpresse 9. Hier wird der noch geschlossene zweite Kartonagenboden so eingeschnitten und gefaltet, dass eine nachfolgende Presseinrichtung den Karton wie bereits beschrieben definiert zusammenpressen kann.

In einem vierten Schritt nimmt die Greifeinrichtung 17 die Packungsmäntel auf und bestückt die sich anschließende Füllmaschine. Dies kann, wie in Fig. 1B gezeigt, in mehreren parallelen Linien erfolgen.

Nach der Übergabe der nun leeren Umverpackungen OP an die Kartonagenpresse 9 nimmt der Roboterarm 1 die Greifeinrichtung 17 zur Handhabung der Packungsmäntel auf. Um die Zykluszeit zu reduzieren, erfolgt dies mit der Greifeinrichtung 17, so dass ein vollständiger Greiferaustausch entfällt. Hierbei bedient sich das Greifelement 2 der vorhandenen Vakuumsaugerelemente 13, 15 mit denen die Greifeinrichtung 17 ansaugt. Zentrieraufnahmen und eine elektropneumatische Kupplung verbinden nun Sensoren und Aktoren der Greifeinrichtung 17 mit dem Greifelement 2.

Um bei einem Energieausfall das Lösen der Greiferverbindung zu verhindern, fährt bei der Aufnahme der Greifeinrichtung 17 das Joch 12 der oberen Saugeraufnahme in eine mechanische Aufnahme der Greifeinrichtung 17, so dass die Greiferverbindung auch bei einem Energieausfall erhalten bleibt.

Mit der nun aufgenommenen Greifeinrichtung 17 fährt das Greifelement 2 über die Hebeplatte 25, so dass durch eine Hubbewegung die Packungsmäntel in die Greifeinrichtung 17 übergeben werden können. Im Anschluss an die Übergabe der Packungsmäntel verschiebt das Greifelement 2 diese zur Übergabeeinrichtung 5 der Füllmaschine, koppelt sich im dynamischen Abfüllprozess an die Übergabeeinrichtung 5 an und übergibt die Packungsmäntel an die Füllmaschine (U). Um den Zyklus abzuschließen, legt das Greifelement 2 die Greifeinrichtung 17 in einer Zentrierung ab und verfährt zur erneuten Aufnahme der Umverpackung OP zur Palette P bzw. zum Magazin 3.

Das Magazin 3 wird vom Greifelement 2 in den Arbeitszyklen beladen, in denen eine Beladung der Füllmaschine aufgrund der längeren Zykluszeit der Füllmaschine nicht möglich ist.

## Patentansprüche

1. Vorrichtung zur Übergabe von flach gefalteten und aufrecht stehenden Packungsmänteln an eine Weiterverarbeitungseinheit, insbesondere Füllmaschine für flüssige oder pastöse Produkte, wobei jeweils eine bestimmte Anzahl Packungsmäntel in einer Umverpackung (OP) zur Verfügung gestellt werden und wobei die Umverpackungen (OP) der Packungsmäntel geöffnet und entfernt werden,
mit wenigstens einem an einem Roboterarm (1) befindliches Greifelement (2) zum Transport einer Umverpackung (OP) zu einer Schneide- und Auspackstation (4), Elementen zum Aufschneiden und Auspacken der Packungsmäntel, wenigstens einer Absaugeinrichtung (23) zum Absaugen des beim Aufschneiden anfallenden Schneidstaubes sowie einer Greifeinrichtung (17) zum Ergreifen der von der Umverpackung (OP) befreiten aufrecht stehenden Packungsmänteln und zur Übergabe an die Weiterverarbeitungseinheit vorgesehen ist,
**dadurch gekennzeichnet, dass** die Greifeinrichtung (17) mindestens eine Längsseitenführung (18) umfasst und dass zur Abstützung der Stirnseiten der aufrecht stehenden Packungsmäntel eine Stirnseite der Greifeinrichtung (17) mit einer festen Stütze versehen ist und eine weitere variable Stütze (19) auf der gegenüberliegenden Seite angeordnet ist, um die Packungsmäntel zusammen zu drücken.

2. Vorrichtung nach Anspruch 1,
**dadurch gekennzeichnet, dass** das Greifelement (2) mehrere pneumatisch betriebene Vakuumsaugelemente aufweist.

3. Vorrichtung nach Anspruch 2 ,
**dadurch gekennzeichnet, dass** das Greifelement (2) drei in einer Ebene in einem Dreieck angeordnete Vakuumsaugelemente (13) aufweist.

4. Vorrichtung nach Anspruch 3,
**dadurch gekennzeichnet, dass** das Greifelement (2) zwei in eine weitere Ebene schwenkbare Arme (14) mit Vakuumsaugelementen (15) aufweist.

5. Vorrichtung nach einem der Ansprüche 1 bis 4,
**dadurch gekennzeichnet, dass** der Roboterarm (1) oder das Greifelement (2) wenigstens einen optischen Sensor (6) zum Erkennen der Lage und Ausrichtung der Umverpackungen (OP) aufweist.

6. Vorrichtung nach Anspruch 5,
**dadurch gekennzeichnet, dass** der optische Sensor (6) einen Laser, einen Detektor zum Erfassen des reflektierten Laserstrahls und wenigstens einen schwenkbaren Spiegel zur 3D-Objekt- und Lagebestimmung umfasst.

7. Vorrichtung nach einem der Ansprüche 1 bis 6,
**dadurch gekennzeichnet, dass** die Schneide- und Auspackstation (4) eine Messereinheit (8) zum Aufschneiden der Umverpackungen (OP) aufweist

8. Vorrichtung nach einem der Ansprüche 1 bis 7,
**dadurch gekennzeichnet, dass** die Schneide- und Auspackstation (4) eine Öffnungs- und Wendeeinrichtung (24) aufweist.

9. Vorrichtung nach einem der Ansprüche 1 bis 8,
**dadurch gekennzeichnet, dass** die Schneide- und Auspackstation (4) eine vertikal verfahrbare Hebeplatte (25) zum Absetzen der von der Umverpackung (OP) befreiten Packungsmäntel aufweist.

10. Vorrichtung nach einem der Ansprüche 1 bis 9, **gekennzeichnet durch** Mittel zum Flachfalten und Entsorgen der entfernten Umverpackungen (OP).

11. Vorrichtung nach einem der Ansprüche 1 bis 10,
**dadurch gekennzeichnet, dass** die Greifeinrichtung (17) mit dem Greifelement (2) zwangskoppelbar ist.

12. Vorrichtung nach einem der Ansprüche 1 bis 11, **gekennzeichnet durch** wenigstens ein Magazin (3) zur Aufnahme einer Mehrzahl von ungeöffneten Umverpackungen (OP).

13. Verfahren zur Übergabe von flach gefalteten und aufrecht stehenden Packungsmänteln an eine Weiterverarbeitungseinheit, insbesondere Füllmaschine für flüssige oder pastöse Produkte, wobei jeweils eine bestimmte Anzahl Packungsmäntel in einer Umverpackung (OP) zur Verfügung gestellt werden, **dadurch gekennzeichnet, dass** die Umverpackungen (OP) der Packungsmäntel mittels einer Vorrichtung nach einem der Ansprüche 1 bis 12 geöffnet und entfernt werden,
wobei das Verfahren die folgenden Schritte enthält:
a) Aufnahme einer ungeöffneten Umverpackung (OP),
b) Ausrichtung und Transport der Umverpackung (OP) zu einer Schneide- und Auspackstation (4) mittels einem an einem Roboterarm (1) befindlichen Greifelement (2),
c) Zuführen der Oberseite der Umverpackung (OP) zu einer Messereinheit (8),
d) Aufschneiden der Umverpackung (OP) und Aufklappen der geöffneten Oberseiten,
e) Absaugen des entstandenen Schneidstaubes,
f) Einspannen und Aufstellen der in der geöffneten Umverpackung (OP) befindlichen Packungsmäntel auf eine Hebeplatte (25),
g) Abziehen der Umverpackung (OP) und Einspannen der Packungsmäntel an ihren beiden freien Stirnseiten,
h) Entfernung der Umverpackung (OP),
i) Anheben der Hebeplatte in eine darüber befindliche Greifeinrichtung (17) auf das Niveau der Zuführebene der Weiterverarbeitungseinrichtung und
j) Übergabe der Packungsmäntel mittels der Greifeinrichtung (17) an die gewünschte Zufuhrlinie der Weiterverarbeitungseinrichtung.

14. Verfahren nach Anspruch 13,
**dadurch gekennzeichnet, dass** die Umverpackungen (OP) auf einer Palette angeliefert werden.

15. Verfahren nach Anspruch 13 oder 14,
**dadurch gekennzeichnet, dass** vor Schritt a) eine Erkennung der Lage und Ausrichtung der ungeöffneten Umverpackung (OP) erfolgt.

16. Verfahren nach einem der Ansprüche 13 bis 15,
**dadurch gekennzeichnet, dass** zwischen den Schritten a) und b) eine Zwischenspeicherung der ungeöffneten Umverpackungen (OP) in einem Magazin (3) erfolgt.

17. Verfahren nach einem der Ansprüche 13 bis 16,
**dadurch gekennzeichnet, dass** die Umverpackungen (OP) von dem Greifelement (2) zunächst an ihrer freien Längsseite und zusätzlich auf ihrer Oberseite von Vakuumsaugelementen (13, 15) gegriffen werden.

18. Verfahren nach einem der Ansprüche 13 bis 17,
**dadurch gekennzeichnet, dass** die Umverpackungen (OP) während der Übergabe an die Schneide- und Auspackstation (4) vom Greifelement (2) derart gedreht werden, dass die Oberseite der Packungsmäntel zur Messereinheit (8) weist.

19. Verfahren nach einem der Ansprüche 13 bis 18,
**dadurch gekennzeichnet, dass** die Schritte d) und e) gleichzeitig durchgeführt werden.

20. Verfahren nach einem der Ansprüche 13 bis 19,
**dadurch gekennzeichnet, dass** vor Schritt i) die Oberseite der auf der Hebeplatte (25) kopfüber stehenden Packungsmäntel abgesaugt wird.

21. Verfahren nach einem der Ansprüche 13 bis 20,
**dadurch gekennzeichnet, dass** die entfernten und einseitig offenen Umverpackungen (OP) vom Greifelement (2) einer Kartonagenpresse (9) zugeführt werden, in der die noch geschlossene Unterseite so eingeschnitten und gefaltet wird, dass eine nachfolgende Presseinrichtung den Karton definiert zusammenpressen kann.

22. Verfahren nach Anspruch 21,
**dadurch gekennzeichnet, dass** in der Presseinrichtung angeordnete Schneidmesser dreieckige Klinken in die zusammengepressten Seitenwände stanzen, die dann so vercrimpt werden, dass sich der zusammengedrückte Karton nach dem sich anschließenden Abwurf in einen Abfallwagen (10) nicht mehr öffnen kann.

## Claims

1. Device for transferring flat folded and upright standing package sleeves to a further processing unit, in particular a filling machine for liquid or pasty products, wherein a certain number of package sleeves are provided in an outer package (OP) and wherein the outer packages (OP) of the package sleeves are opened and removed, having at least one gripping element (2) located on a robot arm (1) for transporting an outer package (OP) to a cutting and unpacking station (4), elements for cutting and unpacking the package sleeves, at least one suction device (23) is provided for sucking off the cutting dust produced during cutting, and a gripping device (17) for gripping the upright standing package sleeves freed from the outer package (OP) and for transferring them to the further processing unit,
**characterised in that**
the gripping device (17) comprises at least one longitudinal side guide (18) and that for supporting the end faces of the upright standing package sleeves, one end face of the gripping device (17) is provided with a fixed support and a further variable support (19) is arranged on the opposite side in order to compress the package sleeves.

2. Device according to claim 1,
**characterised in**
**that** the gripping element (2) has several pneumatically operated vacuum suction elements.

3. Device according to claim 2,
**characterised in that**
the gripping element (2) comprises three vacuum suction elements (13) arranged in one plane in a triangle.

4. Device according to claim 3,
**characterised in that**
the gripping element (2) comprises two arms (14) pivotable into a further plane and provided with vacuum suction elements (15).

5. Device according to any of claims 1 to 4,
**characterised in that**
the robot arm (1) or the gripping element (2) comprises at least one optical sensor (6) for detecting the position and orientation of the outer packages (OP).

6. Device according to claim 5,
**characterised in that**
the optical sensor (6) comprises a laser, a detector for detecting the reflected laser beam and at least one pivotable mirror for 3D object and position determination.

7. Device according to any one of claims 1 to 6,
**characterized in that**
the cutting and unpacking station (4) comprises a knife unit (8) for cutting the outer packages (OP).

8. Device according to any of claims 1 to 7,
**characterised in that**
the cutting and unpacking station (4) comprises an opening and turning device (24).

9. Device according to any one of claims 1 to 8,
**characterised in that**
the cutting and unpacking station (4) has a vertically movable lifting plate (25) for depositing the package sleeves freed from the outer package (OP).

10. Device according to one of claims 1 to 9,
**characterised by**
means for flat folding and disposal of the removed outer packages (OP).

11. Device according to any of claims 1 to 10,
**characterised in that**
the gripping device (17) can be positively coupled to the gripping element (2).

12. Device according to any one of claims 1 to 11,
**characterised by**
at least one magazine (3) for holding a plurality of unopened outer packages (OP).

13. Method for transferring flat folded and upright package sleeves to an further processing unit, in particular a filling machine for liquid or pasty products, wherein a certain number of package sleeves are provided in an outer package (OP),
**characterised in that**
the outer package (OP) of the package sleeves is opened and removed by means of a device according to one of claims 1 to 12,
wherein the method comprising the following steps:
a) receiving an unopened outer package (OP),
b) alignment and transport of the outer package(OP) to a cutting and unpacking station (4) by means of a gripping element (2) located on a robot arm (1),
c) feeding the top side of the outer package (OP) to a knife unit (8),
d) cutting open the outer package (OP) and unfolding the opened top parts,
e) suction of the cutting dust produced,
f) clamping and setting up the package sleeves contained in the opened outer package (OP) onto a lifting plate (25),
g) removal of the outer package (OP) and clamping of the package sleeves at their two free front ends,
h) removal of the outer package (OP),
i) lifting the lifting plate into a gripping device (17) located above it to the level of the feed level of the further processing device and
j) transfer of the package sleeves by means of the gripping device (17) to the desired infeed line of the further processing device.

14. Method according to claim 13,
**characterised in that**
the outer packages (OP) are delivered on a pallet.

15. Method according to claim 13 or 14,
**characterised in that**
prior to step a) there will be a recognition of the position and orientation of the unopened outer package (OP).

16. Method according to one of claims 13 to 15,
**characterised in that**
between steps a) and b) there will be an intermediate storage of the unopened outer packages (OP) in a magazine (3).

17. Proceedings under any of claims 13 to 16,
**characterised in that**
the outer packages (OP) are firstly gripped on their free longitudinal side and additionally on their upper side by vacuum suction elements (13,15).

18. Method according to any of claims 13 to 17,
**characterised in that**
the outer packages (OP) are rotated by the gripping element (2) during transfer to the cutting and unpacking station (4) in such a way that the upper side of the package sleeves faces the knife unit (8).

19. Method according to one of claims 13 to 18,
**characterised in that**
steps d) and e) are carried out simultaneously.

20. Method according to any one of claims 13 to 19,
**characterised in that**
prior to step i) the upper side of the package sleeves standing upside down on the lifting plate (25) is sucked off.

21. Method according to one of claims 13 to 20,
**characterised in that**
the removed outer packages (OP), which are open on one side, are fed by the gripping element (2) to a cardboard press (9) in which the still closed underside is cut and folded so that a subsequent pressing device can compress the cardboard in a defined manner.

22. Method according to claim 21,
**characterised in that**
cutting knives arranged in the pressing device to punch triangular pawls into the compressed side walls, which are then crimped in such a way that the compressed carton cannot be opened any more after having been thrown into a waste trolley (10).

## Revendications

1. Dispositif servant au transfert d'enveloppes d'emballage pliées à plat et placées verticalement en position droite, ledit transfert se produisant vers une unité de traitement ultérieur, en particulier une machine de remplissage pour des produits liquides ou pâteux, où des enveloppes d'emballage, suivant un nombre déterminé, sont à chaque fois mises à disposition dans un suremballage (OP) et où les suremballages (OP) des enveloppes d'emballage sont ouverts et enlevés, où il est prévu au moins un élément de préhension (2) servant au transport d'un suremballage (OP) jusqu'à un poste de coupe et de déballage (4), ledit élément de préhension se trouvant sur un bras de robot (1), où il est prévu des éléments servant à la découpe et au déballage des enveloppes d'emballage, au moins un dispositif d'aspiration (23) servant à aspirer la poussière de coupe se produisant pendant la découpe, ainsi qu'un dispositif de préhension (17) qui sert à saisir les enveloppes d'emballage placées verticalement en position droite et libérées du suremballage (OP), et qui sert au transfert vers l'unité de traitement ultérieur,
**caractérisé en ce que**
le dispositif de préhension comprend au moins un guidage (18) le long du grand côté, et **en ce que**, pour servir d'appui aux faces frontales des enveloppes d'emballage placées verticalement en position droite, un côté frontal du dispositif de préhension (17) est doté d'un support fixe, et un autre support variable (19) est disposé sur le côté opposé, pour serrer les enveloppes d'emballage les unes contre les autres.

2. Dispositif selon la revendication 1,
**caractérisé en ce que**
l'élément de préhension (2) présente plusieurs éléments d'aspiration sous vide actionnés pneumatiquement.

3. Dispositif selon la revendication 2,
**caractérisé en ce que**
l'élément de préhension (2) présente trois éléments d'aspiration sous vide (13) disposés dans un triangle formé dans un plan.

4. Dispositif selon la revendication 3,
**caractérisé en ce que**
l'élément de préhension (2) présente deux bras (14) comportant des éléments d'aspiration sous vide (15), lesdits bras pouvant pivoter dans un autre plan.

5. Dispositif selon l'une quelconque des revendications 1 à 4,
**caractérisé en ce que**
le bras (1) du robot ou l'élément de préhension (2) présente au moins un capteur optique (6) servant à la détection de la position et de l'alignement des suremballages (OP).

6. Dispositif selon la revendication 5,
**caractérisé en ce que**
le capteur optique (6) comprend un laser, un détecteur servant à la détection du faisceau laser réfléchi et au moins un miroir orientable servant à la définition d'un objet en 3D et d'une position.

7. Dispositif selon l'une quelconque des revendications 1 à 6,
**caractérisé en ce que**
le poste de coupe et de déballage (4) présente une unité (8) dotée de lames de coupe servant à la découpe des suremballages (OP).

8. Dispositif selon l'une quelconque des revendications 1 à 7,
**caractérisé en ce que**
le poste de coupe et de déballage (4) présente un dispositif d'ouverture et de retournement (24).

9. Dispositif selon l'une quelconque des revendications 1 à 8,
**caractérisé en ce que**
le poste de coupe et de déballage (4) présente une plaque de levage (25) pouvant être déplacée verticalement, ladite plaque de levage servant à déposer les enveloppes d'emballage libérées du suremballage (OP).

10. Dispositif selon l'une quelconque des revendications 1 à 9,
**caractérisé**
**par** des moyens servant au pliage à plat et à l'élimination des suremballages enlevés (OP).

11. Dispositif selon l'une quelconque des revendications 1 à 10,
**caractérisé en ce que**
le dispositif de préhension (17) peut être couplé de manière forcée, à l'élément de préhension (2).

12. Dispositif selon l'une quelconque des revendications 1 à 11,
**caractérisé**
**par** au moins un magasin (3) servant à la réception d'une pluralité de suremballages (OP) non ouverts.

13. Procédé de transfert d'enveloppes d'emballage pliées à plat et placées verticalement en position droite, ledit transfert se produisant vers une unité de traitement ultérieur, en particulier une machine de remplissage pour des produits liquides ou pâteux, où des enveloppes d'emballage, suivant un nombre déterminé, sont à chaque fois mises à disposition dans un suremballage (OP),
**caractérisé en ce que**
les suremballages (OP) des enveloppes d'emballage sont ouverts et enlevés au moyen d'un dispositif selon l'une quelconque des revendications 1 à 12, où le procédé comprend les étapes suivantes qui consistent :
a) à recevoir un suremballage (OP) non ouvert,
b) à aligner et à transporter le suremballage (OP) jusqu'à un poste de coupe et de déballage (4), au moyen d'un élément de préhension (2) se trouvant sur un bras de robot (1),
c) à amener la partie supérieure du suremballage (OP) jusqu'à une unité (8) dotée de lames de coupe,
d) à découper le suremballage (OP) et à déployer les parties supérieures ouvertes,
e) à aspirer la poussière due à la découpe,
f) à serrer et à placer verticalement, sur une plaque de levage (25), les enveloppes d'emballage se trouvant dans le suremballage ouvert (OP),
g) à retirer le suremballage (OP) et à serrer les enveloppes d'emballage contre leurs deux faces frontales libres,
h) à enlever le suremballage (OP),
i) à relever la plaque de levage placée dans un dispositif de préhension (17) se trouvant au dessus de ladite plaque de levage qui est relevée jusqu'au niveau du plan d'amenée du dispositif de traitement ultérieur, et
j) à transférer les enveloppes d'emballage au moyen du dispositif de préhension (17), jusqu'à la ligne d'amenée souhaitée du dispositif de traitement ultérieur.

14. Procédé selon la revendication 13,
**caractérisé en ce que**
les suremballages (OP) sont livrés sur une palette.

15. Procédé selon la revendication 13 ou 14,
**caractérisé en ce que**,
avant l'étape a), il se produit une détection de la position et de l'alignement du suremballage (OP) non ouvert.

16. Procédé selon l'une quelconque des revendications 13 à 15,
**caractérisé en ce que**,
entre les étapes a) et b), il se produit dans un magasin (3), un stockage intermédiaire des suremballages (OP) non ouverts.

17. Procédé selon l'une quelconque des revendications 13 à 16,
**caractérisé en ce que**
les suremballages (OP) sont saisis par l'élément de préhension (2), d'abord au niveau de leur grand côté libre et, en outre, sont saisis sur leur partie supérieure, par des éléments d'aspiration sous vide (13, 15).

18. Procédé selon l'une quelconque des revendications 13 à 17,
**caractérisé en ce que**
les suremballages (OP), pendant le transfert vers le poste de coupe et de déballage (4), sont tournés par l'élément de préhension (2), de manière telle que la partie supérieure des enveloppes d'emballage fait face à l'unité (8) dotée de lames de coupe.

19. Procédé selon l'une quelconque des revendications 13 à 18,
**caractérisé en ce que**
les étapes d) et e) sont exécutées en même temps.

20. Procédé selon l'une quelconque des revendications 13 à 19,
**caractérisé en ce que**,
avant l'étape i), la partie supérieure des enveloppes d'emballage est aspirée, lesdites enveloppes d'emballage étant placées verticalement en position renversée, sur la plaque de levage (25).

21. Procédé selon l'une quelconque des revendications 13 à 20,
**caractérisé en ce que**
les suremballages (OP) enlevés et ouverts sur un côté sont amenés, par l'élément de préhension (2), à une presse de cartonnages (9) dans laquelle la partie inférieure encore fermée est entaillée et pliée de manière telle, qu'un dispositif de compression suivant puisse comprimer le carton, de façon définie.

22. Procédé selon la revendication 21,
**caractérisé en ce que**
des lames de coupe disposées dans le dispositif de compression découpent des poignées triangulaires dans les parois latérales comprimées, lesquelles poignées sont serties ensuite de manière telle, que le carton comprimé ne puisse plus s'ouvrir après l'éjection qui s'ensuit dans un chariot à déchets (10).
